# EUROPEAN PATENT APPLICATION

(11) **EP 3 913 790 A1**
(43) Date of publication of application: **24.11.2021**
(21) Application number: 21174673.0
(22) Date of filing: 19.05.2021
(51) Int. Cl.: H02P 21/32, H02P 6/185

(54) **POWER CONVERSION APPARATUS, METHOD AND NON-TRANSITORY MEMORY DEVICE**

(30) Priority: 20.05.2020 JP 2020088091; 09.04.2021 JP 2021066779
(71) Applicant: Kabushiki Kaisha Yaskawa Denki, Kitakyushu-shi, Fukuoka 806-0004 (JP)
(72) Inventor: SATO, Sadayuki, Kitakyushu-shi (JP); IURA, Hideaki, Kitakyushu-shi (JP); KOGA, Mitsuhiro, Kitakyushu-shi (JP)
(74) Representative: Grünecker Patent- und Rechtsanwälte PartG mbB

(57) **Abstract**

A power conversion apparatus includes: a first search control unit configured to generate a first command to provide a first electrical output to a motor; a magnetic pole position estimation unit configured to receive a first electrical response to the first electrical output and estimate a position of a magnetic pole of the motor based on the first electrical response; a condition setting unit configured to set a pulse provide condition in accordance with the estimated position of the magnetic pole; a second search control unit configured to generate a second command to provide a positive electrical pulse output and a negative electrical pulse output to the motor in accordance with the pulse provide condition; a difference calculation unit configured to receive a positive electrical response to the positive electrical pulse output and a negative electrical response to the negative electrical pulse output and calculate a magnitude difference between the positive electrical response and the negative electrical response; a condition change unit configured to change the pulse provide condition to generate a modified second command when the magnitude difference is smaller than a predetermined difference level; and a polarity estimation unit configured to estimate a polarity of the magnetic pole based on the magnitude difference corresponding to the modified second command when the magnitude difference is larger than the predetermined difference level.

## Description

### BACKGROUND

### Field

The present disclosure relates to a power conversion apparatus, a method, and a non-transitory memory device.

### Description of the Related Art

In Japanese Unexamined Patent Application Publication No. 2007-259610, an apparatus for adding a predetermined phase shift value to the phase of the output voltage, changing the phase shift value one or more times, calculating the frequency shift value of the output voltage based on the detected value of the output current, and shifting the frequency of the output voltage is disclosed at the time of start-up of the synchronous motor.

### SUMMARY

The present disclosure provides an apparatus effective for preventing unintentional inverse rotation of a motor during start-up.

A power conversion apparatus according to an aspect of the present disclosure includes: a first search control unit configured to generate a first command to provide a first electrical output to a motor; a magnetic pole position estimation unit configured to receive a first electrical response to the first electrical output and estimate a position of a magnetic pole of the motor based on the first electrical response; a condition setting unit configured to set a pulse provide condition in accordance with the estimated position of the magnetic pole; a second search control unit configured to generate a second command to provide a positive electrical pulse output and a negative electrical pulse output to the motor in accordance with the pulse provide condition; a difference calculation unit configured to receive a positive electrical response to the positive electrical pulse output and a negative electrical response to the negative electrical pulse output and calculate a magnitude difference between the positive electrical response and the negative electrical response; a condition change unit configured to change the pulse provide condition to generate a modified second command when the magnitude difference is smaller than a predetermined difference level; and a polarity estimation unit configured to estimate a polarity of the magnetic pole based on the magnitude difference corresponding to the modified second command when the magnitude difference is larger than the predetermined difference level.

A method according to another aspect of the present disclosure includes: generating a first command to provide a first electrical output to a motor; receiving a first electrical response to the first electrical output; estimating a position of a magnetic pole of the motor based on the first electrical response; setting a pulse provide condition in accordance with the estimated position of the magnetic pole; generating a second command to provide a positive electrical pulse output and a negative electrical pulse output to the motor in accordance with the pulse provide condition; receiving a positive electrical response to the positive electrical pulse output and a negative electrical response to the negative electrical pulse output; calculating a magnitude difference between the positive electrical response and the negative electrical response; changing the pulse provide condition to generate a modified second command when the magnitude difference is smaller than a predetermined difference level; and estimating a polarity of the magnetic pole based on the magnitude difference corresponding to the modified second command when the magnitude difference is larger than the predetermined difference level.

A non-transitory memory device according to yet another aspect of the present disclosure has instructions stored thereon that, in response to execution by a processing device, cause the processing device to perform operations including: generating a first command to provide a first electrical output to a motor including a sensor; receiving a first electrical response to the first electrical output; estimating a position of a magnetic pole of the motor based on the first electrical response; setting a pulse provide condition in accordance with the estimated position of the magnetic pole; generating a second command to provide a positive electrical pulse output and a negative electrical pulse output in accordance with the pulse provide condition; receiving a positive electrical response to the positive electrical pulse output and a negative electrical response to the negative electrical pulse output; calculating a magnitude difference between the positive electrical response and the negative electrical response; estimating a polarity of the magnetic pole based on the magnitude difference; generating a driving command to provide electric power to the motor based on the estimated position of the magnetic pole and the estimated polarity of the magnetic pole; receiving sensor feedback generated by the sensor in response to the driving command; determining a time-variant angular displacement of the magnetic pole and a moving direction of the magnetic pole based on the sensor feedback; updating the estimated position of the magnetic pole based on the time-variant angular displacement and the moving direction; and detecting an estimation error of the polarity of the magnetic pole based on the moving direction.

According to the present disclosure, it is possible to provide an apparatus effective for preventing unintentional inverse rotation of a motor during start-up.

### BRIEF DESCRIPTION OF THE DRAWINGS

FIG. 1 is a schematic diagram illustrating a configuration of a power conversion apparatus.
FIG. 2 is a schematic diagram illustrating a relationship between a magnetic pole position and a positive pulse output and ta negative pulse output.
FIG. 3 is a graph illustrating the magnitude of a response to the positive pulse output and the magnitude of a response to the negative pulse output.
FIG. 4 is a block diagram illustrating a hardware configuration of control circuitry.
FIG. 5 is a flowchart illustrating a control procedure.
FIG. 6 is a flowchart illustrating a first search control procedure.
FIG. 7 is a flowchart illustrating a second search control procedure.
FIG. 8 is a schematic diagram illustrating a modification of a power conversion apparatus.
FIG. 9 is a flowchart showing a modification of the control procedure.

### DETAILED DESCRIPTION

In the following description, with reference to the drawings, the same reference numbers are assigned to the same components or to similar components having the same function, and overlapping description is omitted.

### Apparatus

The power conversion apparatus 1 according to the present disclosure is an apparatus for providing driving electric power to a motor 20. The motor 20 is a synchronous motor in which a rotor has a magnetic pole. Examples of the synchronous motor in which the rotor has a magnetic pole include a permanent magnet type synchronous motor. Examples of the permanent magnet type synchronous motor include a surface permanent magnet (SPM) motor and an interior permanent magnet (IPM) motor. The motor 20 may be a synchronous motor in which the rotor has saliency. Examples of the synchronous motor in which the rotor has saliency include IPM motor.

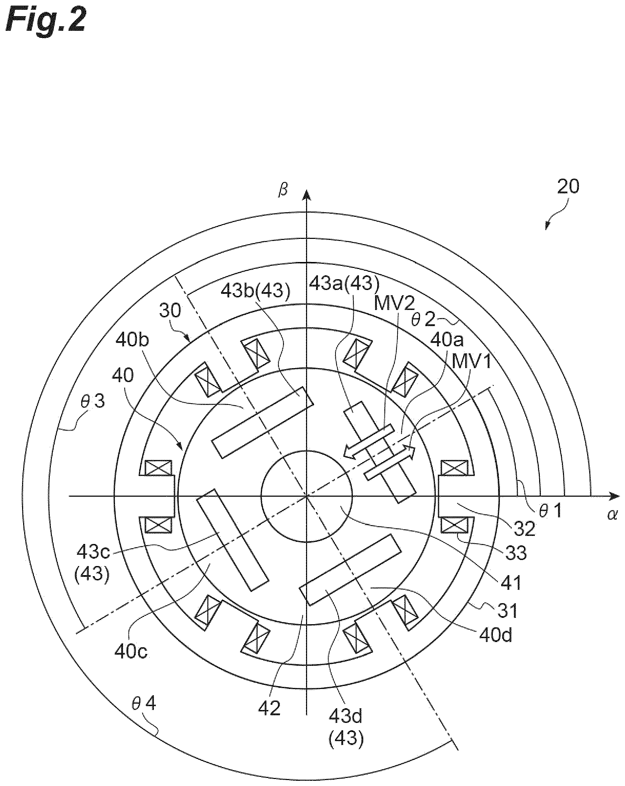

The motor 20 illustrated in FIG. 2 is an IPM motor and includes a stator 30 and a rotor 40. The stator 30 includes an annular yoke 31, a plurality of teeth 32, and a plurality of coils 33. The plurality of teeth 32 are arranged at equal intervals along the circumferential direction of the yoke 31. Each of the plurality of teeth 32 protrudes from the inner periphery of the yoke 31 toward the center of the yoke 31. The plurality of teeth 32 are arranged at regular intervals at a predetermined angle pitch (60° in the drawing) along the rotation direction of the rotor 40 (the rotation direction of the magnetic pole). The plurality of coils 33 are attached to the plurality of teeth 32, respectively. The stator 30 generates a magnetic field that rotates about the center of the yoke 31 in response to providing power to the plurality of coils 33.

The rotor 40 includes a shaft 41, a rotor core 42, and a plurality of permanent magnets 43. The shaft 41 rotates around the center of the yoke 31. The rotor core 42 is made of a soft magnetic material and is fixed to the outer periphery of the yoke 31. The permanent magnets 43 are embedded in the rotor core 42 and form magnetic poles in the rotor 40. In the illustrated example, four permanent magnets 43a, 43b, 43c, and 43d form four magnetic poles 40a, 40b, 40c, and 40d, respectively.

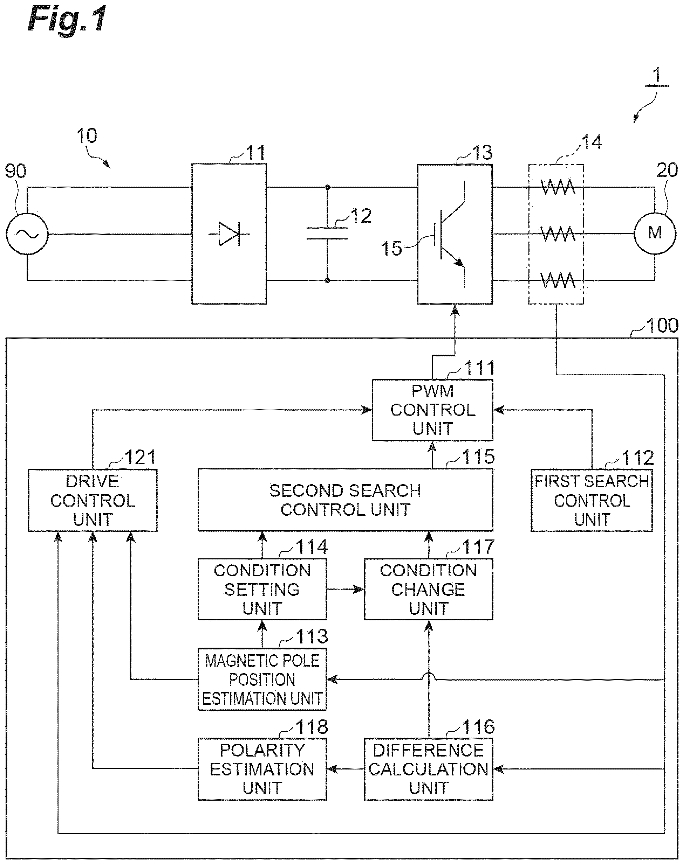

Referring to FIG. 1, the power conversion apparatus 1 converts primary side electric power of the power supply 90 into secondary side electric power and provides the secondary side electric power to the motor 20. The primary side electric power may be alternating current (AC) electric power or direct current (DC) electric power. The secondary side electric power is AC electric power. For example, both the primary side electric power and the secondary side electric power are three phase AC electric power. For example, the power conversion apparatus 1 includes power conversion circuitry 10 and control circuitry 100.

The power conversion circuitry 10 converts the primary side electric power to secondary side electric power and provides it to the motor 20. The power conversion circuitry 10 is, for example, a voltage-type inverter, and applies a driving voltage in accordance with the voltage command to the motor 20. For example, the power conversion circuitry 10 includes converter circuitry 11, a smoothing capacitor 12, inverter circuitry 13, and a current sensor 14. The converter circuitry 11 is, for example, diode bridge circuitry or PWM converter circuitry, and converts the supplied electric power into DC electric power. The smoothing capacitor 12 smoothes the DC electric power.

The inverter circuitry 13 performs power conversion between the DC electric power and the driving electric power. For example, the inverter circuitry 13 includes a plurality of switching elements 15, and performs the power conversion by switching on and off the plurality of switching elements 15. The switching element 15 is, for example, a power MOSFET (Metal Oxide Semiconductor Field Effect Transistor), an IGBT (Insulated Gate Bipolar Transistor), or the like, and switches on and off in accordance with a gate drive signal. The current sensor 14 detects a current flowing between the inverter circuitry 13 and the motor 20. For example, the current sensor 14 may be configured to detect currents of all phases (U-phase, V-phase, and W-phase) of three phase AC, or may be configured to detect currents of any two phases of three phases. As long as the zero-phase current is not generated, the sum of the currents of the U-phase, the V-phase, and the W-phase is zero. Therefore, even when the currents of the two phases are detected, information on the currents of all the phases is obtained.

The configuration of the power conversion circuitry 10 described above is merely an example, and may be changed in any manner as long as the driving electric power may be provided to the motor 20. For example, the power conversion circuitry 10 may be a current-type inverter. The current-type inverter outputs the driving current in accordance with the current command to the motor 20. The power conversion circuitry 10 may be matrix converter circuitry that performs bidirectional power conversion between supplied electric power and driving electric power without performing DC conversion. When the supplied electric power is DC electric power, the power conversion circuitry 10 may not include the converter circuitry 11.

The control circuitry 100 controls power conversion circuitry 10 to provide driving electric power to motor 20. For example, when the power conversion circuitry 10 is a voltage-type inverter, the control circuitry 100 controls the power conversion circuitry 10 to apply a driving voltage in accordance with the voltage command to the motor 20. If the power conversion circuitry 10 is a current-type inverter, the control circuitry 100 controls the power conversion circuitry 10 to provide the driving current in accordance with the current command to the motor 20.

Here, in order to drive the motor 20, the phase of the current flowing through the stator 30 is adjusted by providing the driving electric power based on the position of the magnetic pole of the rotor 40 (for example, the position of the magnetic pole 40a). The control circuitry 100 may detect the position of the magnetic pole by a sensor or may estimate the position of the magnetic pole by sensorless. For example, the control circuitry 100 estimates the position of the magnetic pole based on the voltage command, the driving current provided to the motor 20 accordingly, and a frequency command. However, immediately after the power supply to the control circuitry 100 is started, the position of the magnetic pole cannot be detected unless a sensor such as an absolute value encoder is used. If the driving of the motor 20 is started in a state where the position and the polarity of the magnetic pole are unknown, the position of the magnetic pole is not correctly detected thereafter. If the position of the magnetic pole is not detected correctly, an unintentional inverse rotation of the rotor 40 may occur.

The control circuitry 100 is configured to execute: generating a first command to provide a first electrical output (for example a search output) to a motor 20; controlling power conversion circuitry 10 to provide the motor 20 with the search output in accordance with the first command; receiving a first electrical response to the first electrical output (a response to the search output); estimating a position of a magnetic pole of the motor 20 based on the first electrical response; setting a pulse provide condition in accordance with the estimated position of the magnetic pole; generating a second command to provide a positive electrical pulse output (a positive pulse output) and a negative electrical pulse output (a negative pulse output) to the motor in accordance with the pulse provide condition; controlling the power conversion circuitry 10 to provide the motor 20 with the positive pulse output and the negative pulse output in accordance with the second command; receiving a positive electrical response to the positive electrical pulse output and a negative electrical response to the negative electrical pulse output; calculating a magnitude difference (a difference value) between the positive electrical response (a magnitude of a response to the positive pulse output) and the negative electrical response (a magnitude of a response to the negative pulse output); changing the pulse provide condition to generate a modified second command when the magnitude difference is smaller than a predetermined difference level; and estimating a polarity of the magnetic pole based on the magnitude difference corresponding to the modified second command when the magnitude difference is larger than the predetermined difference level. For example, the control circuitry 100 is configured to: repeat, until the difference value exceeds a predetermined level, operations of changing the pulse provide condition, controlling the power conversion circuitry 10 to provide the motor 20 with the positive pulse output and the negative pulse output in accordance with the changed pulse provide condition, and calculating the difference value; and estimate the polarity of the magnetic pole based on the difference value.

According to such a configuration, when the difference value between the positive pulse output and the negative pulse output does not exceed the predetermined level, the provision of the positive pulse output and the negative pulse output and the calculation of the difference value are repeated, so that erroneous detection of the polarity based on the difference value is prevented. Accordingly, since the unintentional inverse rotation of the motor 20 (the unintentional inverse rotation of the rotor 40) caused by the erroneous detection of the polarity of the magnetic pole is reduced, the unintentional inverse rotation of the motor 20 may be reduced.

For example, the control circuitry 100 controls the power conversion circuitry 10 to provide the motor 20 with a search output of radio frequency that cannot be followed by the rotor 40. When the power conversion circuitry 10 is a voltage-type inverter, the control circuitry 100 applies a search voltage (search output) of radio frequency from the power conversion circuitry 10 to the motor 20, and estimates the position of at least one magnetic pole based on a search current (response) provided to the motor 20 in response to the application of the search voltage. The control circuitry 100 applies a positive pulse voltage (positive pulse output) and a negative pulse voltage (negative pulse output) from the power conversion circuitry 10 to the motor 20 in accordance with the pulse provide condition, and calculates a difference value between a positive current provided to the motor 20 in accordance with the positive pulse voltage and a negative current provided to the motor 20 in accordance with the negative pulse voltage.

When the power conversion circuitry 10 is a current-type inverter, the control circuitry 100 controls the power conversion circuitry 10 to provide a search current (search output) of radio frequency to the motor 20, and estimates the position of at least one magnetic pole based on a search voltage (response) applied to the motor 20 in response to the search current being provided. Also, the control circuitry 100 causes the power conversion circuitry 10 to provide a positive pulse current (positive pulse output) and a negative pulse current (negative pulse output) to the motor 20 in accordance with the pulse provide condition, and calculates a difference value between a positive voltage applied to the motor 20 in accordance with the positive pulse current and a negative voltage applied to the motor 20 in accordance with the negative pulse current. Hereinafter, the configuration of the control circuitry 100 when the power conversion circuitry 10 is a voltage-type inverter will be described in more detail.

As shown in FIG. 1, the control circuitry 100 includes, as functional components (hereinafter referred to as "functional blocks"), a PWM control unit 111, a first search control unit 112, a magnetic pole position estimation unit 113, a condition setting unit 114, a second search control unit 115, a difference calculation unit 116, a condition change unit 117, a polarity estimation unit 118, and a drive control unit 121.

The PWM control unit 111 controls the power conversion circuitry 10 to apply a driving voltage in accordance with the voltage command to the motor 20. For example, the PWM control unit 111 switches on and off the plurality of switching elements 15 of the inverter circuitry 13 so as to apply the driving voltage corresponding to the voltage command vector in a fixed coordinate system (coordinate system fixed to the stator 30) to the motor 20.

The first search control unit 112 controls the power conversion circuitry 10 to apply a radio frequency search voltage (an example of the search output) to the motor 20. For example, the first search control unit 112 generates a search voltage command (an example of the first command) for applying the search voltage to the power conversion circuitry 10, and outputs the search voltage command to the PWM control unit 111. The search voltage command includes, for example, a temporal change in phase of a voltage command vector in a fixed coordinate system.

As shown in FIG. 2, the fixed coordinate system has an origin at the rotation center of the rotor 40, an α axis, and a β axis perpendicular to the α axis. Perpendicular means meeting at an electrical angle of 90°. The search voltage command includes a temporal change of the phase angle of the voltage command vector with respect to the α axis.

Referring back to FIG. 1, the magnetic pole position estimation unit 113 estimates the position of at least one magnetic pole of the motor 20 based on the search current (response to the search output) provided to the motor 20 in accordance with the application of the search voltage. For example, the magnetic pole position estimation unit 113 acquires (or receives) the detection result of the search current (an example of the first electrical response to the first electrical output) from the current sensor 14. The magnetic pole position estimation unit 113 may estimate the position of any one of the magnetic poles 40a, 40b, 40c, and 40d or may estimate the position of each of the magnetic poles 40a, 40b, 40c, and 40d. For example, the magnetic pole position estimation unit 113 estimates a magnetic pole position θ1 that is the center position of the magnetic pole 40a, a magnetic pole position θ2 that is the center position of the magnetic pole 40b, a magnetic pole position θ3 that is the center position of the magnetic pole 40c, and a magnetic pole position θ4 that is the center position of the magnetic pole 40d at angles around the origin (rotation center of the rotor 40) with reference to the α axis (see FIG. 2).

The condition setting unit 114 sets the pulse provide condition in accordance with the estimation result of the position of the magnetic pole. For example, the condition setting unit 114 sets the pulse provide condition in accordance with the estimation result of the magnetic pole position θ1. The pulse provide condition is a condition for applying the positive pulse voltage and the negative pulse voltage. The positive pulse voltage is a voltage that generates a single magnetic flux vector in a predetermined direction in a fixed coordinate system in a short period of time in which the movement of the rotor 40 is limited to a fine movement. The negative pulse voltage is a voltage that generates a magnetic flux vector in a direction opposite to the magnetic flux vector generated by the positive pulse voltage in a short period of time in which the movement of the rotor 40 is limited to a fine movement.

The conditions for applying the positive pulse voltage and the negative pulse voltage include a pulse phase condition for determining the phase of the positive pulse voltage and the negative pulse voltage, a pulse width condition for determining the pulse width of the positive pulse voltage and the negative pulse voltage, and a pulse magnitude condition for determining the magnitude of the positive pulse voltage and the negative pulse voltage. For example, the condition setting unit 114 determines the pulse phase condition based on the estimation result of the magnetic pole position θ1 such that the phases of the positive pulse voltage and the negative pulse voltage correspond to the magnetic pole position θ1. For example, the condition setting unit 114 sets the pulse phase condition such that the magnetic flux vector MV1 generated by applying the positive pulse voltage PV1 and the magnetic flux vector MV2 generated by applying the negative pulse voltage PV2 (or generated in response to the second command) pass through at least one magnetic pole (e.g., the magnetic pole 40a) (see FIG. 2). In the illustrated example, it can be recognized that passing through the permanent magnet 43 is passing through the magnetic pole, but depending on the arrangement of the permanent magnet 43, it may be unclear to what extent the magnetic pole is in the range. In such a case, passing through the magnetic pole means, for example, passing within ±30° in electrical angle with respect to the position of the center of the magnetic pole.

The condition setting unit 114 sets a pulse width condition so that the pulse width of the positive pulse voltage and the pulse width of the negative pulse voltage have the same predetermined value, and sets a pulse magnitude condition so that the magnitude of the positive pulse voltage and the magnitude of the negative pulse voltage have the same predetermined value. The predetermined value is set in advance so that the rotor 40 is not moved or the movement of the rotor 40 is limited to at least slight movement. For example, the predetermined values are set in advance so that the magnetic flux vectors MV1 and MV2 do not deviate from the magnetic pole even if the rotor 40 is slightly moved by applying the positive pulse voltage and the negative pulse voltage.

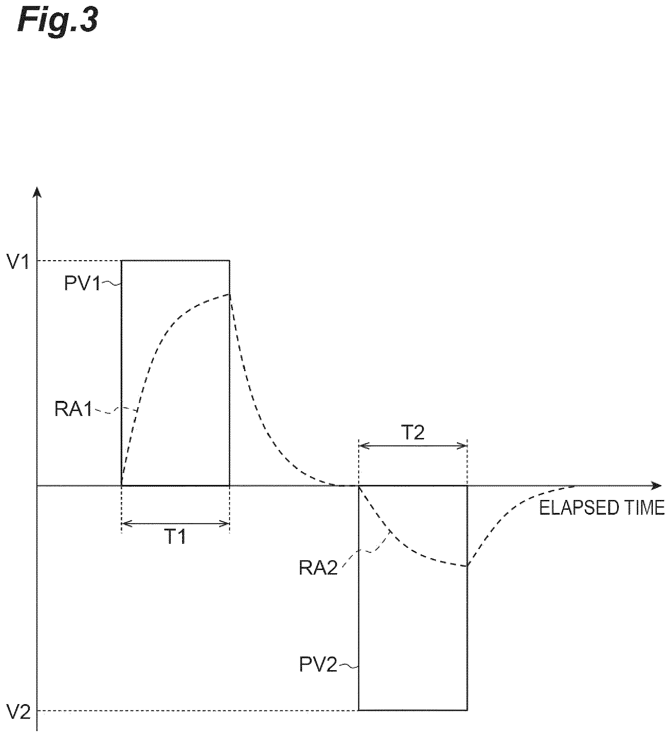

FIG. 3 is a graph showing the relationship between the elapsed time and the magnitude of the voltage vector. In this graph, the positive pulse voltage PV1 is a single rectangular wave protruding in the positive direction, and the negative pulse voltage PV2 is a single rectangular wave protruding in the negative direction. In FIG. 3, the application period T1 corresponds to the width of the positive pulse voltage PV1, and the application period T2 corresponds to the width of the negative pulse voltage PV2. The applied voltage V1 corresponds to the magnitude of the positive pulse voltage PV1, and the applied voltage V2 corresponds to the magnitude of the negative pulse voltage PV2.

As shown in FIG. 3, the condition setting unit 114 may set the pulse provide condition to apply the positive pulse voltage PV1 and the negative pulse voltage PV2 in this order. Conversely, the condition setting unit 114 may set the pulse provide condition to apply the negative pulse voltage PV2 and the positive pulse voltage PV1 in this order. Further, the condition setting unit 114 may set the pulse provide condition such that a predetermined period is provided between the positive pulse voltage PV1 and the negative pulse voltage PV2. For example, the predetermined period of time is determined such that the current generated by the application of the previous pulse voltage is zero before the application of the subsequent pulse voltage.

Referring back to FIG. 1, the second search control unit 115 applies the positive pulse voltage and the negative pulse voltage from the power conversion circuitry 10 to the motor 20 in accordance with the pulse provide condition. For example, the second search control unit 115 generates a voltage command (an example of the second command) for applying the positive pulse voltage PV1 and the negative pulse voltage PV2 from the power conversion circuitry 10 to the motor 20, and outputs the voltage command to the PWM control unit 111.

The difference calculation unit 116 calculates a difference value between the positive electrical response (the magnitude of the positive current provided to the motor 20 in accordance with the application of the positive pulse voltage) and the negative electrical response (the magnitude of the negative current provided to the motor 20 in accordance with the application of the negative pulse voltage). For example, the difference calculation unit 116 obtains the detection results of positive current and negative current (an example of the positive electrical response and an example of the negative electrical response) from the current sensor 14.

The calculation method of the difference value is not particularly limited as long as the magnitude of the difference value can be quantitatively evaluated. For example, as illustrated in FIG. 3, the difference calculation unit 116 calculates, as the difference value, the difference between the magnitude of the positive current RA1 provided to the motor 20 in accordance with the application of the positive pulse voltage PV1 and the magnitude of the negative current RA2 provided to the motor 20 in accordance with the application of the negative pulse voltage PV2.

The difference calculation unit 116 may calculate the difference between the integral value of the magnitude of the positive current RA1 and the integral value of the magnitude of the negative current RA2 as the difference value. The difference calculation unit 116 may calculate the difference between the average magnitude of the positive current RA1 and the average magnitude of the negative current RA2 as the difference value. The difference calculation unit 116 may calculate the difference between the maximum value of the magnitude of the positive current RA1 and the maximum value of the magnitude of the negative current RA2 as the difference value.

The magnitude relationship between the magnitude of the positive current RA1 and the magnitude of the negative current RA2 varies depending on the polarity of the magnetic pole (for example, the polarity of the magnetic pole 40a). For example, when the direction of the magnetic flux generated by the application of the positive pulse voltage PV1 (the direction of the magnetic flux vector MV1) coincides with the direction of the magnetic flux generated by the magnetic pole 40a at the magnetic pole position θ1 (hereinafter referred to as "magnetic flux direction of magnet"), the positive current RA1 is larger than that when the direction of the magnetic flux vector MV1 is opposite to the magnetic flux direction of magnet. Similarly, when the direction of the magnetic flux generated by the application of the negative pulse voltage PV2 (the direction of the magnetic flux vector MV2) coincides with the magnetic flux direction of the magnet, the negative current RA2 is larger than when the direction of the magnetic flux vector MV2 is opposite to the magnetic flux direction of the magnet. Therefore, when the width and magnitude of the positive pulse voltage PV1 are equal to the width and magnitude of the negative pulse voltage PV2, the magnetic flux direction of magnet can be estimated based on the magnitude relationship between the positive current RA1 and the negative current RA2. For example, when the difference value described above is a positive value, the polarity of the magnetic pole 40a is estimated to be the polarity (for example, N pole) in which the magnetic flux direction of the magnet coincides with the magnetic flux vector MV1. When the difference value is a negative value, the polarity of the magnetic pole 40a is estimated to be the polarity (for example, S pole) in which the magnetic flux direction of the magnet coincides with the magnetic flux vector MV2. However, in the actual motor 20, when the positive pulse voltage PV1 and the negative pulse voltage PV2 are applied, the magnitude of the difference value changes depending on which part of the rotor 40 the teeth 32 face. For example, the magnitude of the difference value is different between a case where the teeth 32 face the permanent magnets 43 and a case where the teeth 32 face between the permanent magnets 43. Due to the influence of such a real environment, when the magnitude of the difference value is small, an error may occur in the estimation result of the polarity of the magnetic pole.

On the other hand, the condition change unit 117 repeats changing the pulse provide condition, causing the second search control unit 115 to apply the positive pulse voltage and the negative pulse voltage in accordance with the changed pulse provide condition, and causing the difference calculation unit 116 to evaluate the difference value until the difference value exceeds the predetermined level.

For example, the condition change unit 117 may change the pulse provide condition to change the direction of the magnetic flux vector generated by providing the positive pulse voltage and the negative pulse voltage (or generated in response to the second command). For example, the condition change unit 117 changes the pulse phase condition to change the directions of the magnetic flux vectors MV1 and MV2 within a range in which the magnetic flux vectors MV1 and MV2 of FIG. 2 do not deviate from the same magnetic pole. For example, the condition change unit 117 changes the pulse phase condition so as to change the direction of the magnetic flux vectors MV1 and MV2 within the range of the magnetic pole through which the magnetic flux vectors MV1 and MV2 in accordance with the pulse phase condition determined by the condition setting unit 114 currently pass (within ±30° in electrical angle with respect to the position of the center of the magnetic pole).

The condition change unit 117 may determine an adjustment angle of the direction of the magnetic flux vector based on the angle pitch of the coil 33, and change the pulse provide condition to change the direction of the magnetic flux vector in accordance with the adjustment angle. For example, the condition change unit 117 may change the pulse provide condition to change the direction of the magnetic flux vector by an odd multiple (for example, equal to, three times, or five times) of half the angle pitch (0.5 times the angle pitch).

The condition change unit 117 may change the pulse phase condition such that the magnetic flux vectors MV1 and MV2 pass through one of the magnetic poles 40b, 40c, and 40d (second magnetic pole) when the difference value in a state in which the magnetic flux vectors MV1 and MV2 pass through the magnetic pole 40a (first magnetic pole) does not exceed a predetermined level. For example, the condition change unit 117 may change the pulse phase condition such that the magnetic flux vectors MV1 and MV2 pass through the magnetic pole 40b (second magnetic pole) when the difference value in a state in which the magnetic flux vectors MV1 and MV2 pass through the magnetic pole 40a (first magnetic pole) does not exceed the predetermined level. Further, the condition change unit 117 may change the pulse phase condition such that the magnetic flux vectors MV1 and MV2 pass through the magnetic pole 40c (second magnetic pole) when the difference value in a state in which the magnetic flux vectors MV1 and MV2 pass through the magnetic pole 40b (first magnetic pole) does not exceed the predetermined level. Further, the condition change unit 117 may change the pulse phase condition such that the magnetic flux vectors MV1 and MV2 pass through the magnetic pole 40d (second magnetic pole) when the difference value in a state in which the magnetic flux vectors MV1 and MV2 pass through the magnetic pole 40c (first magnetic pole) does not exceed the predetermined level.

The condition change unit 117 may change the pulse provide condition to change the magnitudes of the positive pulse voltage and the negative pulse voltage. For example, the condition change unit 117 may change the pulse magnitude condition so as to increase the magnitude of the applied voltage V1 of the positive pulse voltage PV1 and the applied voltage V2 of the negative pulse voltage PV2. The condition change unit 117 may change the pulse provide condition to change the widths of the positive pulse voltage and the negative pulse voltage. For example, the condition change unit 117 may change the pulse width condition so as to lengthen the application period T1 of the positive pulse voltage PV1 and the application period T2 of the negative pulse voltage PV2. The condition change unit 117 may be implemented by combining two or more of the following three types: changing the direction of the magnetic flux vector generated by providing the positive pulse voltage and the negative pulse voltage; changing the magnitude of the positive pulse voltage and the negative pulse voltage; and changing the width of the positive pulse voltage and the negative pulse voltage.

The polarity estimation unit 118 estimates the polarity of the magnetic pole 40a based on the difference value exceeding the predetermined level. When a difference value exceeding the predetermined level is obtained in accordance with the pulse provide condition in which the magnetic flux vectors MV1 and MV2 pass through the other magnetic pole, the polarity of the other magnetic pole is estimated based on the difference value. If the polarity of the other magnetic pole is determined, the polarity of the magnetic pole 40a is naturally determined, so that estimating the polarity of the other magnetic pole corresponds to estimating the polarity of the magnetic pole 40a.

The drive control unit 121 starts providing driving electric power from the power conversion circuitry 10 to the motor 20 based on the estimation result of the position of the magnetic pole by the magnetic pole position estimation unit 113 and the estimation result of the polarity of the magnetic pole by the polarity estimation unit 118. For example, the drive control unit 121 generates a voltage command (a driving command) for providing driving electric power from the power conversion circuitry 10 to the motor 20, and outputs the voltage command to the PWM control unit 111. For example, the drive control unit 121 specifies (or identifies) the position of the magnetic pole for control based on the estimation result of the position of the magnetic pole by the magnetic pole position estimation unit 113 and the estimation result of the polarity of the magnetic pole by the polarity estimation unit 118. For example, the estimated value of the position of the magnetic pole the estimated polarity of which coincides with a predetermined reference polarity is specified as the position of the magnetic pole for control. In this case, the estimated value of the position of the magnetic pole that produces a magnetic flux whose direction coincides with that of the magnetic flux vector MV1 is specified as the position of the magnetic pole for control. Hereinafter, the magnetic pole whose position is specified is referred to as a "positive direction magnetic pole". The drive control unit 121 generates a voltage command in a rotating coordinate system. The rotating coordinate system is a coordinate system rotating at a rotation speed determined to rotate in synchronization with the positive direction magnetic pole. For example, the drive control unit 121 generates a voltage command in the rotating coordinate system such that the driving current provided to the motor 20 follows the current command. Thereafter, the drive control unit 121 calculates a voltage command vector in the fixed coordinate system based on the voltage command in the rotating coordinate system and the position of the positive direction magnetic pole, and outputs the calculated voltage command vector to the PWM control unit 111.

Thereafter, the drive control unit 121 continuously updates the position of the positive direction magnetic pole by magnetic pole position calculation based on the output of the rotation detection sensor (e.g., encoder) or sensorless magnetic pole position estimation (e.g., magnetic pole position estimation based on the voltage command, the driving current provided to the motor 20 in response to the voltage command, and the frequency command), and repeatedly outputs the voltage command vector in the fixed coordinate system to the PWM control unit 111 based on the updated position of the positive direction magnetic pole. Accordingly, the driving electric power is continuously provided in accordance with the position of the positive direction magnetic pole. The drive control unit 121 acquires the detection result of the driving current from the current sensor 14.

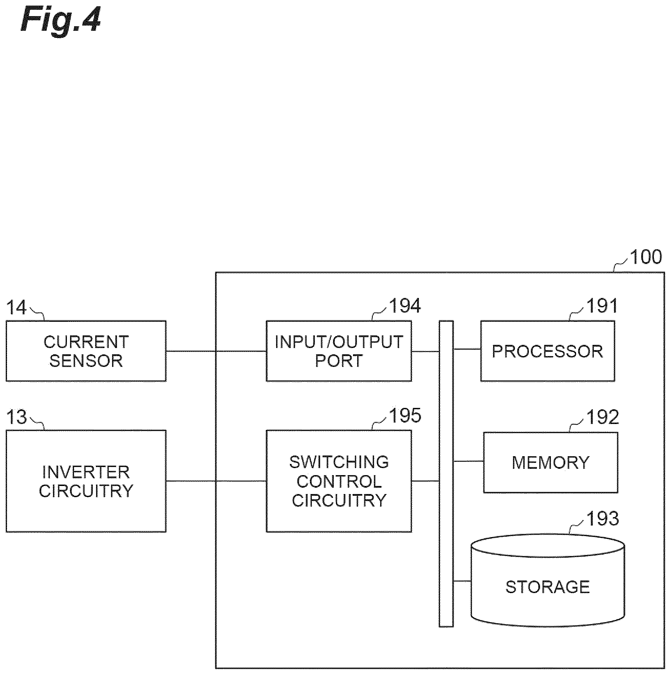

FIG. 4 is a schematic diagram illustrating a hardware configuration of the control circuitry 100. As shown in FIG. 4, control circuitry 100 includes one or more processors 191, a memory 192, a storage 193, input/output ports 194, and switching control circuitry 195. The storage 193 includes a computer-readable storage medium such as a nonvolatile semiconductor memory. The storage 193 stores a program for controlling an apparatus to: control power conversion circuitry 10 to provide a motor 20 with a search output; estimate a position of a magnetic pole of the motor 20 based on a response to the search output; set a pulse provide condition in accordance with the estimated position of the magnetic pole; control the power conversion circuitry 10 to provide the motor 20 with a positive pulse output and a negative pulse output in accordance with the pulse provide condition; calculate a difference value between a magnitude of a response to the positive pulse output and a magnitude of a response to the negative pulse output; repeat, until the difference value exceeds a predetermined level, operations of changing the pulse provide condition, controlling the power conversion circuitry 10 to provide the motor 20 with the positive pulse output and the negative pulse output to the motor 20 in accordance with the changed pulse provide condition, and calculating the difference value; and estimate the polarity of the magnetic pole based on the difference value. The storage 193 stores a program for causing the control circuitry 100 to configure the above-described functional blocks.

The memory 192 temporarily stores a program loaded from the storage medium of the storage 193 and an operation result by the processor 191. The processor 191 executes the program in cooperation with the memory 192 to configure each functional block of the control circuitry 100. The input/output port 194 inputs and outputs an electrical signal to and from the current sensor 14 in accordance with a command from the processor 191. The switching control circuitry 195 outputs the driving electric power to the motor 20 by switching on and off the plurality of switching elements 15 in the inverter circuitry 13 in accordance with a command from the processor 191.

It should be noted that the control circuitry 100 is not limited to one that configures each function by a program. For example, at least a part of the functions of the control circuitry 100 may be configured by a dedicated logic circuit or an application specific integrated circuit (ASIC) in which the dedicated logic circuit is integrated.

### Control Procedure

Next, a start-up control procedure of the motor 20 executed by the control circuitry 100 will be described as an example of the control method. The procedure includes: controlling power conversion circuitry 10 to provide a motor 20 with a search output; estimating a position of a magnetic pole of the motor 20 based on a response to the search output; setting a pulse provide condition in accordance with the estimated position of the magnetic pole; controlling the power conversion circuitry 10 to provide the motor 20 with a positive pulse output and a negative pulse output in accordance with the pulse provide condition; calculating a difference value between a magnitude of a response to the positive pulse output and a magnitude of a response to the negative pulse output; repeating, until the difference value exceeds a predetermined level, operations of changing the pulse provide condition, controlling the power conversion circuitry 10 to provide the motor 20 with the positive pulse output and the negative pulse output in accordance with the changed pulse provide condition, and calculating the difference value; and estimating the polarity of the magnetic pole based on the difference value.

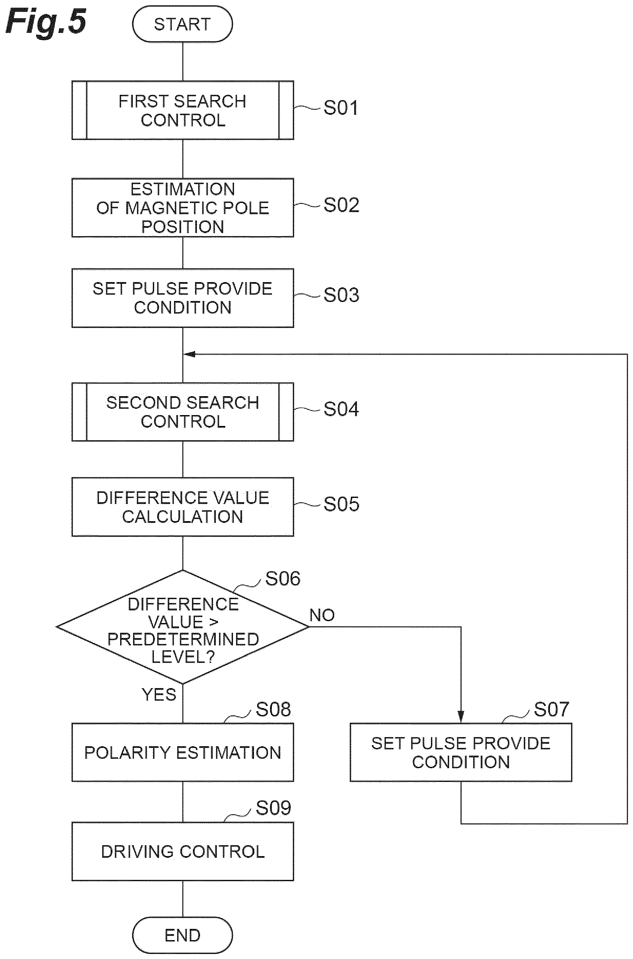

As shown in FIG. 5, the control circuitry 100 first executes operations S01, S02, S03, S04, S05, and S06. In operation S01, the first search control unit 112 causes the power conversion circuitry 10 to apply the search voltage of radio frequency to the motor 20. A more detailed procedure of operation S01 will be described later. In operation S02, the magnetic pole position estimation unit 113 estimates the position of the magnetic pole of the motor 20 based on the search current provided to the motor 20 in accordance with the application of the search voltage. In operation S03, the condition setting unit 114 sets the pulse provide condition in accordance with the estimation result of the position of the magnetic pole.

In operation S04, the second search control unit 115 applies the positive pulse voltage and the negative pulse voltage from the power conversion circuitry 10 to the motor 20 in accordance with the pulse provide condition. A more detailed procedure of operation S04 will be described later. In operation S05, the difference calculation unit 116 calculates the difference value between the magnitude of the positive current provided to the motor 20 in accordance with the application of the positive pulse voltage and the magnitude of the negative current provided to the motor 20 in accordance with the application of the negative pulse voltage. In operation S06, the condition change unit 117 checks whether the difference value exceeds the predetermined level.

If it is determined in operation S06 that the difference value does not exceed the predetermined level, the control circuitry 100 executes operation S07. In operation S07, the condition change unit 117 changes the pulse provide condition. Thereafter, the condition change unit 117 returns the process to operation S04. Thereafter, the operations of applying the positive pulse voltage and the negative pulse voltage from the power conversion circuitry 10 to the motor 20 in accordance with the pulse provide condition, calculating the difference value, and changing the pulse provide condition are repeated until the difference value exceeds the predetermined level.

If it is determined in operation S06 that the difference value exceeds the predetermined level, the control circuitry 100 executes operations S08 and S09. In operation S08, the polarity estimation unit 118 estimates the polarity of the magnetic pole 40a based on the difference value exceeding the predetermined level. In operation S09, the drive control unit 121 starts providing the driving electric power from the power conversion circuitry 10 to the motor 20 based on the estimation result of the position of the magnetic pole by the magnetic pole position estimation unit 113 and the estimation result of the polarity of the magnetic pole by the polarity estimation unit 118. Thereafter, the drive control unit 121 continuously updates the position of the positive direction magnetic pole by the magnetic pole position calculation based on the output of the rotation detection sensor or the sensorless magnetic pole position estimation, and repeatedly outputs the voltage command vector in the fixed coordinate system to the PWM control unit 111 based on the update result of the position of the positive direction magnetic pole. Accordingly, the driving electric power is continuously provided in accordance with the position of the magnetic pole. This completes the start-up control procedure of motor 20.

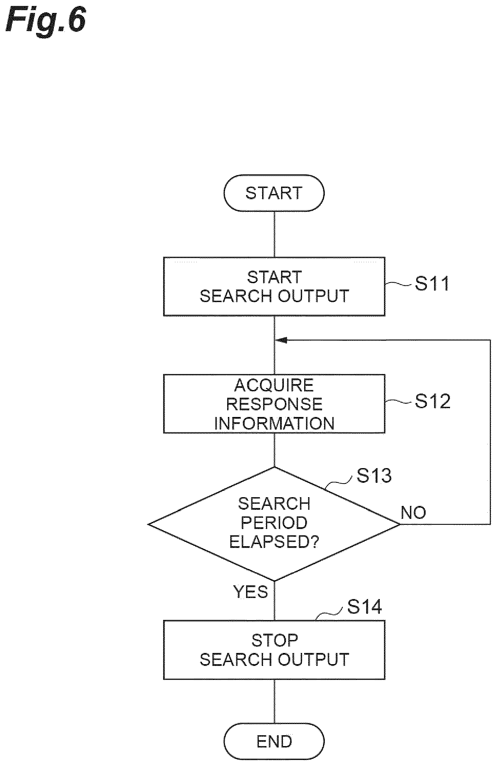

FIG. 6 is a flowchart illustrating a procedure of applying a search voltage in operation S01. As shown in FIG. 6, the control circuitry 100 first executes operations S11, S12, and S13. In operation S11, the first search control unit 112 starts application of the search voltage from the power conversion circuitry 10 to the motor 20. In operation S12, the magnetic pole position estimation unit 113 acquires the detection result of the search current from the current sensor 14, and stores the acquired detection result and the phase of the search voltage at that time. In operation S13, the first search control unit 112 checks whether a predetermined search period has elapsed.

If it is determined in operation S13 that the search period has not elapsed, the control circuitry 100 returns the process to operation S12. Thereafter, until the search period elapses, the application of the search voltage and the acquisition and storage of the detection result of the search current corresponding thereto are repeated.

If it is determined in operation S13 that the search period has elapsed, the control circuitry 100 executes operation S14. In operation S14, the first search control unit 112 stops the application of the search voltage from the power conversion circuitry 10 to the motor 20. This completes the search voltage apply procedure.

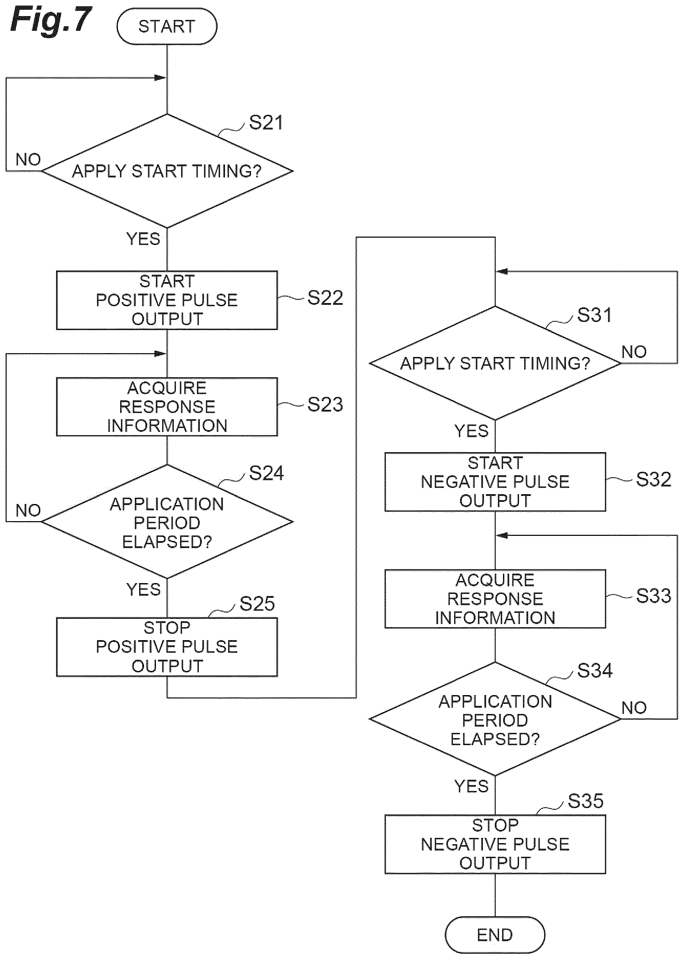

FIG. 7 is a flowchart illustrating a procedure of applying the positive pulse voltage and the negative pulse voltage in operation S04. As shown in FIG. 7, the control circuitry 100 first executes operations S21, S22, S23, and S24. In operation S21, the second search control unit 115 waits for the apply timing of the positive pulse voltage. In operation S22, the second search control unit 115 starts applying the positive pulse voltage from the power conversion circuitry 10 to the motor 20. In operation S23, the difference calculation unit 116 acquires a detection result of positive current from the current sensor 14. In operation S24, the second search control unit 115 checks whether the application period of the positive pulse voltage has elapsed.

If it is determined in operation S24 that the application period of the positive pulse voltage has not elapsed, the control circuitry 100 returns the process to operation S23. Thereafter, the application of the positive pulse voltage and the acquisition of the detection result of the positive current are repeated until the application period of the positive pulse voltage elapses.

If it is determined in operation S24 that the application period of the positive pulse voltage has elapsed, the control circuitry 100 executes operations S25, S31, S32, S33, and S34. In operation S25, the second search control unit 115 stops the application of the positive pulse voltage from the power conversion circuitry 10 to the motor 20. In operation S31, the second search control unit 115 waits for the apply timing of the negative pulse voltage. In operation S32, the second search control unit 115 starts applying the negative pulse voltage from the power conversion circuitry 10 to the motor 20. In operation S33, the difference calculation unit 116 obtains a negative current detection result from the current sensor 14. In operation S34, the second search control unit 115 checks whether the application period of the negative pulse voltage has elapsed.

If it is determined in operation S34 that the application period of the negative pulse voltage has not elapsed, the control circuitry 100 returns the process to operation S33. Thereafter, the application of the negative pulse voltage and the acquisition of the detection result of the negative current are repeated until the application period of the negative pulse voltage elapses.

If it is determined in operation S34 that the application period of the negative pulse voltage has elapsed, the control circuitry 100 executes operation S35. In operation S35, the second search control unit 115 stops the application of the negative pulse voltage from the power conversion circuitry 10 to the motor 20. This completes the application procedure of the positive pulse voltage and the negative pulse voltage.

As described above, a power conversion apparatus 1 includes: a first search control unit 112 configured to control power conversion circuitry 10 to provide a motor 20 with search output; a magnetic pole position estimation unit 113 configured to estimate a position of a magnetic pole of the motor 20 based on a response to the search output; a condition setting unit 114 configured to set a pulse provide condition in accordance with the estimated position of the magnetic pole; a second search control unit 115 configured to control the power conversion circuitry 10 to provide a positive pulse output and a negative pulse output with the motor 20 in accordance with the pulse provide condition; a difference calculation unit 116 configured to calculate a difference value between a magnitude of a response to the positive pulse output and a magnitude of a response to the negative pulse output; a condition change unit 117 configured to repeat changing the pulse provide condition, providing, by the second search control unit 115, the positive pulse output and the negative pulse output in accordance with the changed pulse provide condition, and calculating, by the difference calculation unit 116, the difference value until the difference value exceeds a predetermined level; and a polarity estimation unit 118 configured to estimate a polarity of the magnetic pole based on the difference value.

According to the power conversion apparatus 1, when the difference value between the positive pulse output and the negative pulse output does not exceed the predetermined level, the provision of the positive pulse output and the negative pulse output and the calculation of the difference value are repeated, so that the erroneous detection of the polarity based on the difference value is suppressed. Therefore, since the unintentional inverse rotation of the motor 20 caused by the erroneous detection of the polarity of the magnetic pole is reduced, the unintentional inverse rotation of the motor 20 may be reduced.

The condition setting unit 114 may be configured to set the pulse provide condition such that a magnetic flux vector generated by providing the positive pulse output and the negative pulse output passes through the magnetic pole. In this case, the number of times of providing the positive pulse output and the negative pulse output may be more reliably reduced.

The condition change unit 117 may be configured to change the pulse provide condition to change a direction of the magnetic flux vector generated by providing the positive pulse output and the negative pulse output. In this case, the pulse provide condition may be quickly adjusted.

The motor 20 may include a plurality of coils 33 arranged at a predetermined angle pitch along a rotation direction of the magnetic pole; and the condition change unit 117 may be configured to determine an adjustment angle of the direction of the magnetic flux vector based on the angle pitch and to change the pulse provide condition to change the direction of the magnetic flux vector in accordance with the adjustment angle. The difference value between the magnitude of the response to the positive pulse output and the magnitude of the response to the negative pulse output may vary depending on which part of the rotor 40 each coil 33 faces. By changing the direction of the magnetic flux vector based on the angle pitch, the pulse provide condition may be quickly adjusted by increasing the provide current to the coil 33 that is not easily affected by the rotor 40 while reducing the provide current to the coil 33 that is easily affected by the rotor 40.

The condition change unit 117 may be configured to change the pulse provide condition to change the direction of the magnetic flux vector substantially by an odd multiple of half the angle pitch. In this case, the pulse provide condition may be adjusted more quickly.

The magnetic pole position estimation unit 113 is configured to estimate positions of the first magnetic pole and the second magnetic pole based on the response to the search output, wherein the condition setting unit 114 is configured to set the pulse provide condition such that the magnetic flux vector generated by providing the positive pulse output and the negative pulse output passes through the first magnetic pole, and wherein the condition change unit 117 is configured to change the pulse provide condition such that the magnetic flux vector generated by providing the positive pulse output and the negative pulse output passes through the second magnetic pole. In this case, the pulse provide condition may be quickly adjusted.

The condition change unit 117 is configured to change the pulse provide condition to change magnitudes of the positive pulse output and the negative pulse output. In this case, the pulse provide condition may be quickly adjusted.

The condition change unit 117 is configured to change the pulse provide condition to change widths of the positive pulse output and the negative pulse output. In this case, the pulse provide condition may be quickly adjusted.

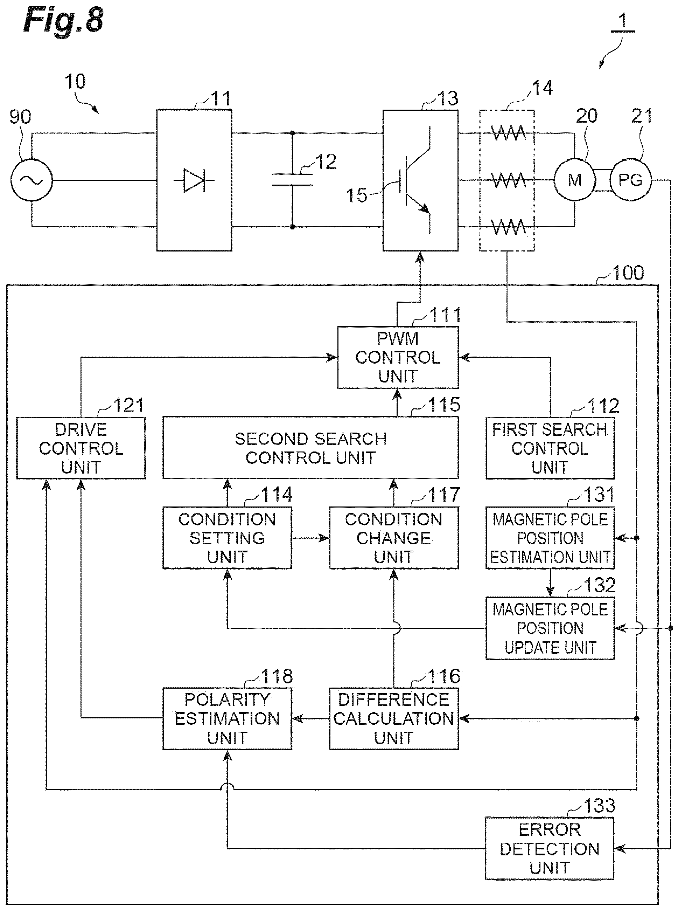

FIG. 8 is a schematic diagram showing modification of the power conversion apparatus 1. In this modification, the motor 20 includes a sensor 21. The sensor 21 detects the displacement (time-variant displacement) of the magnetic poles 40a, 40b, 40c, and 40d. Detecting the displacement of the magnetic poles 40a, 40b, 40c, and 40d includes detecting the displacement direction of the magnetic poles 40a, 40b, 40c, and 40d. Examples of the sensor 21 include a pulse generator that outputs a first pulse wave signal and a second pulse wave signal in accordance with the rotation of the rotor 40. The second pulse wave signal is a signal whose pulse width is equal to that of the first pulse wave signal and whose phase is shifted from that of the first pulse wave signal. Based on the first pulse wave signal and the second pulse wave signal, it is detected in which direction the rotor 40 is rotating (in which direction the magnetic poles 40a, 40b, 40c, and 40d are displaced). The rotation speed of the rotor 40 (the displacement speed of the magnetic poles 40a, 40b, 40c, and 40d) is detected based on the frequencies of the first pulse wave signal and the second pulse wave signal. Further, the rotation angle of the rotor 40 (the displacement angle of the magnetic poles 40a, 40b, 40c, and 40d) is detected based on the count values of the first pulse wave signal and the second pulse wave signal.

The control circuitry 100 in this modification includes a magnetic pole position estimation unit 131 and a magnetic pole position update unit 132 in place of the magnetic pole position estimation unit 113 described above. Like the magnetic pole position estimation unit 113, the magnetic pole position estimation unit 131 estimates the position of the magnetic pole of the motor 20 based on the search current provided to the motor 20 in accordance with the application of the search voltage.

The magnetic pole position update unit 132 updates the estimation result of the position of the magnetic pole by the magnetic pole position estimation unit 131 based on the detection result by the sensor 21. For example, the magnetic pole position update unit 132 identifies the displacement direction and the displacement angle (a time-variant angular displacement) of the magnetic pole based on the first pulse wave signal and the second pulse wave signal output by the sensor 21, and updates the estimation result of the position of the magnetic pole based on the identified displacement direction and displacement angle (the time-variant angular displacement). In this way, the estimation result of the position of the magnetic pole by the magnetic pole position estimation unit 131 is updated by the magnetic pole position update unit 132, so that the information of the current position of the magnetic pole is continuously obtained even after the position of the magnetic pole is estimated by the magnetic pole position estimation unit 131.

The drive control unit 121 controls the power conversion circuitry 10 to provide driving electric power to the motor 20 based on the estimation result of the position of the magnetic pole updated by the magnetic pole position update unit 132 and the estimation result of the polarity of the magnetic pole by the polarity estimation unit 118. For example, the drive control unit 121 specifies the position of the positive direction magnetic pole based on the estimation result of the position of the magnetic pole updated by the magnetic pole position update unit 132 and the estimation result of the polarity of the magnetic pole by the polarity estimation unit 118, and calculates the voltage command vector in the fixed coordinate system based on the voltage command in the rotating coordinate system and the position of the positive direction magnetic pole.

The control circuitry 100 in this modification further includes an error detection unit 133. The error detection unit 133 detects an estimation error of the polarity of the magnetic pole based on the change direction of the position of the magnetic pole detected by the sensor 21 in response to the provision of the driving electric power. For example, the error detection unit 133 detects an estimation error of the polarity of the magnetic pole when the position of the magnetic pole changes in a direction opposite to the rotation direction of the rotating magnetic field generated in accordance with the driving electric power.

The polarity estimation unit 118 may invert the estimation result of the polarity of the magnetic pole when the error detection unit 133 detects an estimation error. For example, the polarity estimation unit 118 may shift the position of the positive direction magnetic pole by 180° in electrical angle. When the positive direction magnetic pole is shifted by an electrical angle of 180°, the polarity of the position that has been regarded as the positive direction magnetic pole is reversed. Therefore, shifting the position of the positive direction magnetic pole by 180° corresponds to an example of inverting the estimation result of the polarity of the magnetic pole. Then, the drive control unit 121 provides the driving electric power from the power conversion circuitry 10 to the motor 20 based on the position of the positive direction magnetic pole after the shift. In this case, the polarity estimation unit 118 may gradually shift the position of the positive direction magnetic pole over a predetermined period.

Further, the polarity estimation unit 118 may re-specify the position that has been regarded as the positive direction magnetic pole as the position of the magnetic pole that produces the magnetic flux in the direction opposite to the magnetic flux vector MV1. Hereinafter, a magnetic pole that generates a magnetic flux in a direction opposite to the magnetic flux vector MV1 is referred to as a "negative direction magnetic pole". In this case, the drive control unit 121 may invert the signs of the d-axis current command value, the q-axis current command value, and the V/f voltage command value to change the control for the positive direction magnetic pole to the control for the negative direction magnetic pole. In this case, the drive control unit 121 may gradually change the values of the d-axis current command value, the q-axis current command value, and the V/f voltage command value toward the sign-inverted values over a predetermined period.

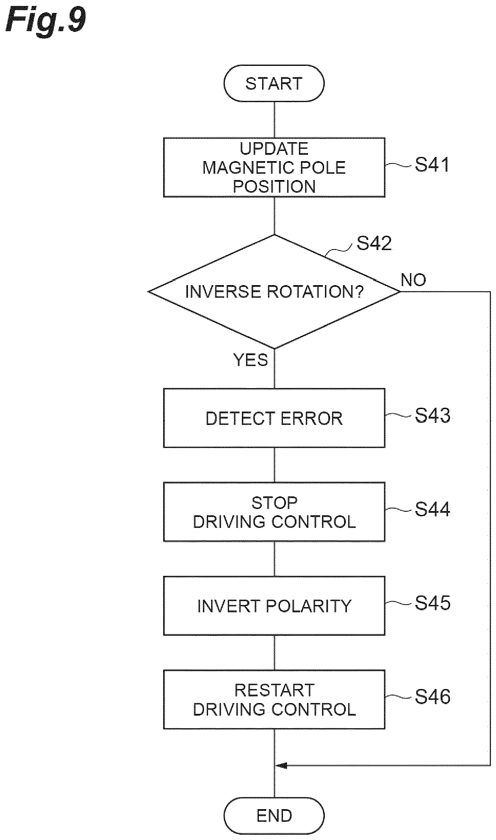

The control circuitry 100 in this modification starts the drive control in operation S09 of FIG. 5, and then executes the procedure shown in FIG. 9. For example, the control circuitry 100 first executes operation S41. In operation S41, the magnetic pole position update unit 132 updates the estimation result of the position of the magnetic pole by the magnetic pole position estimation unit 131 based on the detection result by the sensor 21.

Next, the control circuitry 100 executes operation S42. In operation S42, the error detection unit 133 checks whether the position of the magnetic pole has changed in the direction opposite to the rotation direction of the rotating magnetic field generated in accordance with the driving electric power. If it is determined in operation S42 that the position of the magnetic pole has changed in the direction opposite to the rotational direction of the rotating magnetic field, the control circuitry 100 executes operations S43, S44, S45, and S46.

In operation S43, the error detection unit 133 detects an estimation error of the polarity of the magnetic pole. In operation S44, the drive control unit 121 stops providing the driving electric power from the power conversion circuitry 10 to the motor 20. In operation S45, the polarity estimation unit 118 inverts the estimation result of the polarity of the magnetic pole. In operation S46, the drive control unit 121 resumes controlling the power conversion circuitry 10 to provide driving electric power to the motor 20 based on the polarity of the reversed magnetic pole.

As described above, the power conversion apparatus 1 according to the modification includes; a magnetic pole position update unit 132 configured to update the estimated position of the magnetic pole based on the change in the position detected by the sensor 21; a drive control unit 121 configured to control the power conversion circuitry 10 to provide the motor 20 with driving electric power based on the updated position of the magnetic pole and the estimated polarity of the magnetic pole; and an error detection unit 133 configured to detect an estimation error of the polarity of the magnetic pole based on a moving direction of the magnetic pole detected by the sensor 21. Accordingly, the estimation error of the polarity of the magnetic pole may be quickly detected, and the influence thereof may be reduced.

The polarity estimation unit 118 may invert the estimation result of the polarity of the magnetic pole when the error detection unit 133 detects an estimation error. In this case, the operation of the motor 20 may be quickly normalized based on the magnetic pole position continuously tracked by the magnetic pole position update unit 132 and the estimation result of the polarity of the magnetic pole inverted by the polarity estimation unit 118.

When the magnetic pole position update unit 132 and the error detection unit 133 are further provided, the condition change unit 117 may be omitted because the estimation error may be quickly detected and the operation of the motor 20 may be quickly normalized as described above. The polarity estimation unit 118 may estimate the polarity of the magnetic pole based on the difference value regardless of whether the difference value exceeds the predetermined level.

It is to be understood that not all aspects, advantages and features described herein may necessarily be achieved by, or included in, any one particular example embodiment. Indeed, having described and illustrated various examples herein, it should be apparent that other examples may be modified in arrangement and detail.

We claim all modifications and variations coming within the spirit and scope of the subject matter claimed herein.

Regarding the above embodiments, the following appendices are appended.
(Appendix 1) A power conversion apparatus comprising circuitry configured to:
   control power conversion circuitry to provide a motor with search output;
   estimate a position of a magnetic pole of the motor based on a response to the search output;
   set a pulse provide condition in accordance with the estimated position of the magnetic pole;
   control the power conversion circuitry to provide a positive pulse output and a negative pulse output with the motor in accordance with the pulse provide condition;
   calculate a difference value between a magnitude of a response to the positive pulse output and a magnitude of a response to the negative pulse output;
   repeat, until the difference value exceeds a predetermined level, operations comprising:
      changing the pulse provide condition;
         providing the positive pulse output and the negative pulse output in accordance with the changed pulse provide condition; and
      calculating the difference value; and
   estimate a polarity of the magnetic pole based on the difference value.
(Appendix 2) The power conversion apparatus according to appendix 1, wherein the circuitry is further configured to set the pulse provide condition such that a magnetic flux vector generated by providing the positive pulse output and the negative pulse output passes through the magnetic pole.
(Appendix 3) The power conversion apparatus according to appendix 2, wherein the circuitry is further configured to change the pulse provide condition to change a direction of the magnetic flux vector generated by providing the positive pulse output and the negative pulse output.
(Appendix 4) The power conversion apparatus according to appendix 3, wherein the motor comprises a plurality of coils arranged at a predetermined angle pitch along a rotation direction of the magnetic pole; and
   the circuitry is further configured to determine an adjustment angle of the direction of the magnetic flux vector based on the angle pitch and to change the pulse provide condition to change the direction of the magnetic flux vector in accordance with the adjustment angle.
(Appendix 5) The power conversion apparatus according to appendix 4, wherein the circuitry is further configured to change the pulse provide condition to change the direction of the magnetic flux vector substantially by an odd multiple of half the angle pitch.
(Appendix 6) The power conversion apparatus according to appendix 3, wherein the motor comprises a first magnetic pole, which is the magnetic pole, and a second magnetic pole formed at a position different from the magnetic pole,
   wherein the circuitry is further configured to estimate positions of the first magnetic pole and the second magnetic pole based on the response to the search output,
   wherein the circuitry is further configured to set the pulse provide condition such that the magnetic flux vector generated by providing the positive pulse output and the negative pulse output passes through the first magnetic pole, and
   wherein the circuitry is further configured to change the pulse provide condition such that the magnetic flux vector generated by providing the positive pulse output and the negative pulse output passes through the second magnetic pole.
(Appendix 7) The power conversion apparatus according to any one of appendices 1 to 5, wherein the control circuitry is further configured to control the power conversion circuitry to provide the motor with driving electric power based on the estimated position of the magnetic pole and the estimated polarity of the magnetic pole.
(Appendix 8) The power conversion apparatus according to appendix 7, wherein the motor comprises a first magnetic pole which is the magnetic pole and a second magnetic pole having a polarity opposite to a polarity of the first magnetic pole, and
   wherein the control circuitry is further configured to:
   determine a position of a positive direction magnetic pole to be the estimated position of the first magnetic pole when the estimated polarity of the first magnetic pole coincides with a predetermined reference polarity;
   determine the position of the positive direction magnetic pole to be the estimated position of the second magnetic pole when the estimated polarity of the first magnetic pole is opposite to the reference polarity; and
   control the power conversion circuitry to provide the motor with the driving electric power based on the position of the positive direction magnetic pole.
(Appendix 9) The power conversion apparatus according to any one of appendices 2 to 4, wherein the circuitry is further configured to change the pulse provide condition to change magnitudes of the positive pulse output and the negative pulse output.
(Appendix 10) The power conversion apparatus according to any one of appendices 2 to 5, wherein the circuitry is further configured to change the pulse provide condition to change widths of the positive pulse output and the negative pulse output.
(Appendix 11) The power conversion apparatus according to any one of appendices 1 to 6, wherein the motor includes a sensor configured to detect a change in a position of the magnetic pole, and
   wherein the circuitry is further configured to:
   update the estimated position of the magnetic pole based on the change in the position detected by the sensor;
   control the power conversion circuitry to provide the motor with driving electric power based on the updated position of the magnetic pole and the estimated polarity of the magnetic pole; and
   detect an estimation error of the polarity of the magnetic pole based on a moving direction of the magnetic pole detected by the sensor.
(Appendix 12) The power conversion apparatus according to appendix 11, wherein the circuitry is further configured to invert the polarity of the magnetic pole in response to detecting the estimation error.
(Appendix 13) The power conversion apparatus according to appendix 12, wherein the circuitry is further configured to:
   identify a position of a positive direction magnetic pole having a predetermined reference polarity based on the estimated polarity of the magnetic pole, and to control the power conversion circuitry to provide the motor with driving electric power based on the position of the positive direction magnetic pole;
   shift the position of the positive direction magnetic pole by 180° in electrical angle in response to detecting the estimation error; and
   control the power conversion circuitry to provide the motor with driving electric power based on the shifted position of the positive direction magnetic pole.
(Appendix 14) A power conversion apparatus comprising circuitry configured to:
   control power conversion circuitry to provide a motor with a search output, the motor having a sensor that is configured to detect a change in position of a magnetic pole;
   estimate a position of the magnetic pole of the motor based on a response to the search output;
   set a pulse provide condition in accordance with the estimated position of the magnetic pole;
   control the power conversion circuitry to provide the motor with a positive pulse output and a negative pulse output in accordance with the pulse provide condition;
   calculate a difference value between a magnitude of a response to the positive pulse output and a magnitude of a response to the negative pulse output;
   estimate a polarity of the magnetic pole based on the difference value;
   update the estimated position of the magnetic pole based on the change in the position detected by the sensor;
   control the power conversion circuitry to provide the motor with driving electric power based on the updated position of the magnetic pole and the estimated polarity of the magnetic pole; and
   detect an estimation error of the polarity of the magnetic pole based on a moving direction of the magnetic pole detected by the sensor.
(Appendix 15) The power conversion apparatus according to appendix 14, wherein the circuitry is further configured to invert the estimated polarity of the magnetic pole in response to detecting the estimation error.
(Appendix 16) The power conversion apparatus according to appendix 15, wherein the circuitry is further configured to:
   identify a position of a positive direction magnetic pole having a predetermined reference polarity based on the estimated polarity of the magnetic pole, and to control the power conversion circuitry to provide the motor with driving electric power based on the position of the positive direction magnetic pole;
   shift the position of the positive direction magnetic pole by 180° in electrical angle in response to detecting the estimation error; and
   control the power conversion circuitry to provide the motor with driving electric power based on the shifted position of the positive direction magnetic pole.
(Appendix 17) A control method, comprising:
   controlling power conversion circuitry to provide a motor with a search output;
   estimating a position of a magnetic pole of the motor based on a response to the search output;
   setting a pulse provide condition in accordance with the estimated position of the magnetic pole;
   controlling the power conversion circuitry to provide the motor with a positive pulse output and a negative pulse output in accordance with the pulse provide condition;
   calculating a difference value between a magnitude of a response to the positive pulse output and a magnitude of a response to the negative pulse output;
   repeating, until the difference value exceeds a predetermined level, operations of changing the pulse provide condition, controlling the power conversion circuitry to provide the motor with the positive pulse output and the negative pulse output in accordance with the changed pulse provide condition, and calculating the difference value; and
   estimating the polarity of the magnetic pole based on the difference value.
(Appendix 18) A control method comprising:
   controlling power conversion circuitry to provide a motor with a search output, the motor having a sensor that is configured to detect a change in position of a magnetic pole;
   estimating the position of the magnetic pole of the motor based on a response to the search output;
   setting a pulse provide condition in accordance with an estimation result of the position of the magnetic pole;
   controlling the power conversion circuitry to provide a positive pulse output and a negative pulse output in accordance with the pulse provide condition;
   calculating a difference value between the magnitude of the response to the positive pulse output and the magnitude of the response to the negative pulse output;
   estimating a polarity of the magnetic pole based on the difference value;
   updating the estimated position of the magnetic pole based on a detection result detected by the sensor;
   controlling the power conversion circuitry to provide the motor with driving electric power based on the updated estimation result of the position of the magnetic pole and the estimated polarity of the magnetic pole; and
   detecting an estimation error of the polarity of the magnetic pole based on a moving direction of the magnetic pole detected by the sensor.
(Appendix 19) A non-transitory memory device having instructions stored thereon that, in response to execution by a processing device, cause the processing device to perform operations comprising:
   controlling power conversion circuitry to provide a motor with a search output;
   estimating a position of a magnetic pole of the motor based on a response to the search output;
   setting a pulse provide condition in accordance with the estimated position of the magnetic pole;
   controlling the power conversion circuitry to provide the motor with a positive pulse output and a negative pulse output in accordance with the pulse provide condition;
   calculating a difference value between a magnitude of a response to the positive pulse output and a magnitude of a response to the negative pulse output;
   repeating, until the difference value exceeds a predetermined level, operations of changing the pulse provide condition, controlling the power conversion circuitry to provide the motor with the positive pulse output and the negative pulse output in accordance with the changed pulse provide condition, and calculating the difference value; and
   estimating the polarity of the magnetic pole based on the difference value.
(Appendix 20) A non-transitory memory device having instructions stored thereon that, in response to execution by a processing device, cause the processing device to perform operations comprising:
   controlling power conversion circuitry to provide a motor with a search output, the motor having a sensor that is configured to detect a change in position of a magnetic pole;
   estimating the position of the magnetic pole of the motor based on a response to the search output;
   setting a pulse provide condition in accordance with an estimation result of the position of the magnetic pole;
   controlling the power conversion circuitry to provide a positive pulse output and a negative pulse output in accordance with the pulse provide condition;
   calculating a difference value between the magnitude of the response to the positive pulse output and the magnitude of the response to the negative pulse output;
   estimating a polarity of the magnetic pole based on the difference value;
   updating the estimated position of the magnetic pole based on a detection result detected by the sensor;
   controlling the power conversion circuitry to provide the motor with driving electric power based on the updated estimation result of the position of the magnetic pole and the estimated polarity of the magnetic pole; and
   detecting an estimation error of the polarity of the magnetic pole based on a moving direction of the magnetic pole detected by the sensor.

## Claims

1. A power conversion apparatus (1) comprising:
a first search control unit (112) configured to generate a first command to provide a first electrical output to a motor (20);
a magnetic pole position estimation unit (113) configured to receive a first electrical response to the first electrical output and estimate a position of a magnetic pole of the motor (20) based on the first electrical response;
a condition setting unit (114) configured to set a pulse provide condition in accordance with the estimated position of the magnetic pole;
a second search control unit (115) configured to generate a second command to provide a positive electrical pulse output and a negative electrical pulse output to the motor (20) in accordance with the pulse provide condition;
a difference calculation unit (116) configured to receive a positive electrical response to the positive electrical pulse output and a negative electrical response to the negative electrical pulse output and calculate a magnitude difference between the positive electrical response and the negative electrical response;
a condition change unit (117) configured to change the pulse provide condition to generate a modified second command when the magnitude difference is smaller than a predetermined difference level; and
a polarity estimation unit (118) configured to estimate a polarity of the magnetic pole based on the magnitude difference corresponding to the modified second command when the magnitude difference is larger than the predetermined difference level.

2. The power conversion apparatus (1) according to claim 1, wherein the condition setting unit (114) is further configured to set the pulse provide condition such that a magnetic flux vector generated in response to the second command passes through the magnetic pole.

3. The power conversion apparatus (1) according to claim 2, wherein the condition change unit (117) is further configured to change the pulse provide condition to change a direction of the magnetic flux vector generated in response to the second command.

4. The power conversion apparatus (1) according to claim 3, wherein the motor (20) comprises a plurality of coils (33) arranged at a predetermined angle pitch along a rotation direction of the magnetic pole; and
the condition change unit (117) is further configured to determine an adjustment angle of the direction of the magnetic flux vector based on the angle pitch and to change the pulse provide condition to change the direction of the magnetic flux vector in accordance with the adjustment angle.

5. The power conversion apparatus (1) according to claim 4, wherein the condition change unit (117) is further configured to change the pulse provide condition to change the direction of the magnetic flux vector substantially by an odd multiple of half the angle pitch.

6. The power conversion apparatus (1) according to claim 3, wherein the motor (20) comprises a first magnetic pole, which is the magnetic pole, and a second magnetic pole formed at a position different from the magnetic pole,
wherein the magnetic pole position estimation unit (113) is further configured to estimate the position of the second magnetic pole based on the first electrical response,
wherein the condition setting unit (114) is further configured to set the pulse provide condition such that the magnetic flux vector generated in response to the second command passes through the first magnetic pole, and
wherein the condition change unit (117) is further configured to change the pulse provide condition such that the magnetic flux vector generated in response to the modified second command passes through the second magnetic pole.

7. The power conversion apparatus (1) according to any one of claims 1 to 5, further comprising a drive control unit configured to generate a driving command to provide electric power to the motor (20) based on the estimated position of the magnetic pole and the estimated polarity of the magnetic pole.

8. The power conversion apparatus (1) according to claim 7, wherein the motor (20) comprises a first magnetic pole which is the magnetic pole and a second magnetic pole having a polarity opposite to a polarity of the first magnetic pole, and
wherein the drive control unit is further configured to:
identify a position of a positive direction magnetic pole to be the estimated position of the first magnetic pole when the estimated polarity of the first magnetic pole coincides with a predetermined reference polarity;
identify the position of the positive direction magnetic pole to be the estimated position of the second magnetic pole when the estimated polarity of the first magnetic pole is opposite to the reference polarity; and
generate a driving command to provide the electric power to the motor (20) based on the position of the positive direction magnetic pole.

9. The power conversion apparatus (1) according to any one of claims 2 to 4, wherein the condition change unit (117) is further configured to change the pulse provide condition to change magnitudes of the positive electrical pulse output and the negative electrical pulse output.

10. The power conversion apparatus (1) according to any one of claims 2 to 5, wherein the condition change unit (117) is further configured to change the pulse provide condition to change widths of the positive electrical pulse output and the negative electrical pulse output.

11. The power conversion apparatus (1) according to any one of claims 1 to 6, wherein the motor (20) includes a sensor, and
wherein the power conversion apparatus (1) further comprises:
a magnetic pole position update unit configured to update the estimated position of the magnetic pole based on a time-variant angular displacement of the magnetic pole detected by the sensor;
a drive control unit configured to generate a driving command to provide electric power to the motor (20) based on the updated position of the magnetic pole and the estimated polarity of the magnetic pole; and
an error detection unit configured to detect an estimation error of the polarity of the magnetic pole based on a moving direction of the magnetic pole detected by the sensor.

12. The power conversion apparatus (1) according to claim 11, wherein the polarity estimation unit (118) is further configured to invert the polarity of the magnetic pole in response to the error detection unit detecting the estimation error.

13. The power conversion apparatus (1) according to claim 12, wherein the drive control unit is further configured to:
identify a position of a positive direction magnetic pole having a predetermined reference polarity based on the estimated polarity of the magnetic pole, and to generate a driving command to provide electric power to the motor (20) based on the position of the positive direction magnetic pole;
wherein the polarity estimation unit (118) is configured to shift the position of the positive direction magnetic pole by 180° in electrical angle in response to the error detection unit detecting the estimation error; and
wherein the drive control unit is configured to generate the driving command based on the shifted position of the positive direction magnetic pole.

14. A method comprising:
generating a first command to provide a first electrical output to a motor (20);
receiving a first electrical response to the first electrical output;
estimating a position of a magnetic pole of the motor (20) based on the first electrical response;
setting a pulse provide condition in accordance with the estimated position of the magnetic pole;
generating a second command to provide a positive electrical pulse output and a negative electrical pulse output to the motor (20) in accordance with the pulse provide condition;
receiving a positive electrical response to the positive electrical pulse output and a negative electrical response to the negative electrical pulse output;
calculating a magnitude difference between the positive electrical response and the negative electrical response;
changing the pulse provide condition to generate a modified second command when the magnitude difference is smaller than a predetermined difference level; and
estimating a polarity of the magnetic pole based on the magnitude difference corresponding to the modified second command when the magnitude difference is larger than the predetermined difference level.

15. A non-transitory memory device having instructions stored thereon that, in response to execution by a processing device, cause the processing device to perform operations comprising:
generating a first command to provide a first electrical output to a motor (20) including a sensor;
receiving a first electrical response to the first electrical output;
estimating a position of a magnetic pole of the motor (20) based on the first electrical response;
setting a pulse provide condition in accordance with the estimated position of the magnetic pole;
generating a second command to provide a positive electrical pulse output and a negative electrical pulse output in accordance with the pulse provide condition;
receiving a positive electrical response to the positive electrical pulse output and a negative electrical response to the negative electrical pulse output;
calculating a magnitude difference between the positive electrical response and the negative electrical response;
estimating a polarity of the magnetic pole based on the magnitude difference;
generating a driving command to provide electric power to the motor (20) based on the estimated position of the magnetic pole and the estimated polarity of the magnetic pole;
receiving sensor feedback generated by the sensor in response to the driving command;
determining a time-variant angular displacement of the magnetic pole and a moving direction of the magnetic pole based on the sensor feedback;
updating the estimated position of the magnetic pole based on the time-variant angular displacement and the moving direction; and
detecting an estimation error of the polarity of the magnetic pole based on the moving direction.
